# EUROPEAN PATENT APPLICATION

(11) **EP 3 771 725 A1**
(43) Date of publication of application: **03.02.2021**
(21) Application number: 20188940.9
(22) Date of filing: 31.07.2020
(51) Int. Cl.: C08J 3/22

(54) **MASTERBATCH WITH ANTIBACTERIAL AND / OR ANTIMICROBIAL PROPERTIES**

(30) Priority: 31.07.2019 IT 201900013380
(71) Applicant: Plastisac S.r.l., 46100 Mantova (IT)
(72) Inventor: BERGAMASCHI, Mauro, 46100 Mantova (IT)
(74) Representative: Murgitroyd & Company

(57) **Abstract**

The present invention relates to a process for the production of a plastic material having antibacterial and/or antimicrobial properties using an essential oil as an additive, and to the product obtained using such material in the production process for manufacturing films, threads and objects with the same properties.

In particular, the present invention relates to a process for the production of a concentrated composition more commonly known as a masterbatch, with a polymer or co-polymer base, having antibacterial and/or antimicrobial properties using an essential oil as an additive, and to the product obtained using such masterbatch as a formulative ingredient in the production process for manufacturing films, threads and objects with the same properties.

## Description

### Context of the invention

Bacteria can be found everywhere in the environment. They can transmit disease through contaminated food or water or through contact with objects or surfaces that have been previously handled by sick people or animals.

Thermoplastic polymers are the materials most commonly used for manufacturing products in every sector.

Therefore, it is important to have products available that have been manufactured with a material that can inhibit bacterial proliferation.

The use of natural antibacterial agents is largely preferable.

It is known that various essential oils extracted from different plants have antibacterial power, but the incorporation of oils in plastic materials is considered undesirable when such materials are intended for injection moulding or extrusion. Segregation within the moulded or extruded polymer causes poor dimensional control, whereas a badly structured and non-uniform finish generally requires additional finishing. Furthermore, the expulsion rate of the oil from such materials varies significantly, partly as a function of the concentration of the oil in the composition, the use of the temperature and other production-related and operational factors. Therefore, in practice, it is quite difficult to produce a standard product.

### Detailed description of the invention

The objective of the present invention is to prepare a plastic material having antibacterial and/or antimicrobial properties using an essential oil as an additive, and to prepare the product obtained using such material in the production process for manufacturing films and objects with the same properties.

In particular, an objective of the present invention is the preparation of a concentrated polymer composition or masterbatch suitable for the preparation of filmable and/or extrudable and/or mouldable granules characterised in that they have antibacterial and/or antimicrobial properties.

In a preferred aspect of the present invention, it is possible to prepare said compositions using extrusion technology.

The polymer to be used is conveniently selected according to the final use that is to be made of the product obtained.

Therefore the object of the present invention is a polymer or co-polymer composition that comprises:
a) a polymer material in variable quantities from 60 to 99% by weight, with respect to the total composition;
b) at least one essential oil with a high terpene content in variable quantities from 1 to 40% by weight, with respect to the total composition.

The Applicant has also observed that the masterbatch described and claimed in the present patent application, through successive transformation processes, enables filmable and/or extrudable and/or mouldable granules to be obtained and subsequently items that can pass the antibacterial activity tests as described in detail in the experimental part.

A masterbatch is defined as a concentrated composition of an additive comprising the appropriate essential oil and a polymer material.

A masterbatch containing an additive comprising the appropriate essential oil is usually produced by means of an extrusion process where the appropriate essential oil is added to the powdered polymer material.

The polymer materials of the present invention may be the polymer monomers conveniently selected in the general group comprising the following monomers:

| | |
|---|---|
| CA - Cellulose acetate | EP - Epoxides |
| CAB - Cellulose acetate butyrate | PP - Polypropylene |
| PMP - Poly-4-methylpentene-1 | PA - Polyamides |
| CP - Cellulose propionate | PS - Polystyrene |
| PAI - Polyamide-imide | PB - Polybutene-1 |
| PBT - Polybutylene terephthalate | PC - Polycarbonate |
| PTFE - Polytetrafluoroethylene (Teflon) | PUR - Polyurethane |
| PVB - Polyvinyl butyral | PE - Polyethylene |
| PEI - Polyetherimide | PVC - Polyvinylchloride |
| PVDF - Polyvinylidene fluoride | PVF - Polyvinyl fluoride |
| RC - Regenerated cellulose | PET - Polyethylene terephthalate |
| PI - Polyimide | UP - Unsaturated polyester |
| PIB - Polyisobutylene | |

In a preferred embodiment for the preparation of the masterbatch, the polymer materials are selected from monomers and co-polymers: polyolefin polymers, vinyl aromatic polymers, vinyl acetate polymers, polyamide polymers such as PA6, PA66, PA12 and various others belonging to the polyamide family.

Polymers that can be used in the present invention for the preparation of the masterbatch are selected from the following, namely the various existing commercial grades and related copolymers (e.g. PS is also considered to mean block butadiene copolymers, generally known as HIPS):
polycarbonate (PC);
polyethylene (PE);
polyethylene terephthalate (PET);
polymethylmethacrylate (PMMA);
polypropylene (PP);
polystyrene or polystyrol (PS);
polyvinyl chloride (PVC);
ethyl vinyl acetate (EVA);
nylon or polyamide (PA);
acrylonitrile butadiene styrene (ABS);
polylactate (PLA);
polybutyrate-adipate-terephthalate (PBAT);
polyhydroxybutyrate/polyhydroxyvalerate (PHB/PHV);
low density polyethylene (LDPE);
medium density polyethylene (MDPE);
high density polyethylene (HDPE).

Particularly preferred are the following which are currently on the market: LDPE DOW 780E, EVA GREENFLEX ML40 VERSALIS, PP MOPLEN HF 501N LYONDELLBASELL, LUPOLEN 2426H LYONDELLBASELL, medium density polyethylene PLASTENE R 210, polypropylene copolymer PLASTILENE RCM 1042 Poliplast, polyhydroxybutyrate copolymer/2% polyhydroxyvalerate Goodfellow, Solvay semi opaque polyamide 66. According to the definition provided by the international standard ISO 9235 and adopted by the European Pharmacopoeia Commission, an essential oil is an odorous product, usually of complex composition, obtained from a botanically defined plant raw material by steam distillation, dry distillation, or a suitable mechanical process without heating (cold pressing).

The essential oils conveniently used in the present invention are those that have antimicrobial and antibacterial properties and that are formed by mixtures of terpenes. Without being connected to any scientific theory in particular, it is considered that particularly effective essential oils in the present invention are those with low hydrophilic component content and high terpene fraction content.

In a preferred aspect of the present invention the essential oils are selected from the group comprising: rosemary essential oil (CAS 8000-25-7, b.p. 176°C), hemp essential oil (from steam distillation of dry *Cannabis sativa* flowers, free from THC or CBD, mixture of non-oxygenated terpenes), oregano essential oil (CAS RN 8002-11-2, b.p. 239°C), thyme essential oil (CAS RN 8007-46-3,b.p. 195°C), mint essential oil (CAS RN, 8006-90-4,b.p. 215°C), eucalyptus essential oil (CAS 8000-48-4, b.p. 200°C), lavender essential oil (CAS RN 8000-28-0, b.p. 204°C), geranium essential oil (CAS RN 8000-46-2, b.p. 250°C), citronella essential oil (CAS RN 8000-29-1, b.p. 222°C), orange (CAS RN 8008-57-9,b.p.177°C), grapefruit essential oil (CAS RN 8016-20-4, b.p. 171°C), kaffir lime essential oil (CAS 91771-50-5), lime essential oil (CAS 8008-26-2, b.p. 182°C), lemon essential oil (CAS 84929-31-7, b.p. 176°C), bergamot essential oil (CAS 8007-75-8, b.p. 159°C), mandarin essential oil (CAS 8008-31-9, b.p. 178°C), tea tree essential oil (CAS 68647-73-4, b.p. 165°C), palmarosa essential oil (CAS 8014-19-5), lemongrass essential oil (CAS 8007-02-1), clove essential oil (CAS 8000-34-8, b.p. 251°C), cinnamon essential oil (CAS 8007-80-5, b.p. 194-234°C), cajeput essential oil (CAS 8008-98-8), basil essential oil (CAS 8015-73-4, b.p. 215°C), black pepper essential oil (CAS 8006-82-4, b.p. 166°C), green pepper essential oil (CAS Number: 84625-29-6), chilli essential oil (CAS 404-86-4/9000-70-8) ginger essential oil (CAS 8007-08-7, b.p. 254°C), nutmeg essential oil (CAS 8008-45-5, b.p. 165°C), patchouli essential oil (CAS 8014-09-3, b.p. 287°C) lemon balm essential oil (CAS 8014-71-9), mugwort essential oil (CAS 8008-93-3), yarrow essential oil (CAS 8022-07-9), coriander essential oil (CAS 8008-52-4, b.p. 193°C), myrtle essential oil (CAS 8008-46-6), cananga essential oil (Cananga odorata var. macrophylla, CAS Number 68606-83-7), ylang ylang essential oil (Cananga odorata var. genuina, CAS Number 8006-81-3), chamomile essential oil (Anthemis nobilis, CAS: 84649-86-5) or mixtures thereof.

As well as antibacterial and antimicrobial properties, it is known that essential oils may also have antiviral properties. See, for example, A. Brochot et al. "Antibacterial, antifungal, and antiviral effects of three essential oil blends" Microbiology open, 2017, Aug. 6(4), available at https://www.ncbi.nlm.nih.gov/pmc/articles/PMC5552930/. Therefore, such properties can be found in the objects of the present invention.

In a preferred embodiment of the present invention, the polymer or co-polymer composition comprises:
a) polymer material in variable quantities from 70 to 90% by weight, with respect to the total composition;
b) at least one appropriate essential oil in variable quantities from 5 to 30% by weight, with respect to the total composition.

In a further preferred embodiment, the essential oil is hemp essential oil as previously defined, clove essential oil, cananga essential oil and the polymers defined as being preferable above.

A further subject matter of the present invention is a process for preparing a composition according to the present invention.

For convenience purposes, the variable quantities are indicated as follows:
X% = essential oil;
Y% = powdered polymer (selected from those previously indicated)
Z% = granulated polymer (selected from those previously indicated)
W% = any excipients and/or additional components still within the intervals as previously specified and the total sum of which does not exceed 100%.

Three alternative production methods can be conveniently used for preparing the masterbatch of the present invention, hereinafter referred to as discontinuous process, continuous process and mixed process.

### Discontinuous process

The components of the formula described above are weighed individually according to the final required quantity of masterbatch and are introduced into the mixing device, usually a propeller mixer, thus constituting the so-called "mix".

The mix is then homogenised by mixing at room temperature and introduced into the extruder through a dosing device.

The extruder, which is preferably but not necessarily provided with co-rotating twin-screw technology (e.g. one-screw, counter-rotating twin-screw, multi-screw, etc.), is adjusted to the working conditions so as to enable the plastification of the polymer(s) used according to the properties thereof.

The extrusion process causes the co-penetration of the oil and of the polymer matrix in the plastificated/molten physical state. After restoring the solid state by cooling the material at the outlet of the extrusion chamber, cutting takes place to form granules of a few mm in size. At the end of this process, the mix, which is still homogeneous in the % composition, is initially comprising heterogeneous physical phases, takes the name masterbatch and has generally uniform characteristics, being completely solid in its physical form, ready for use in the subsequent production process.

### Continuous process

The components of the formula described above are not weighed but introduced individually directly into the extruder, through weight or volume dosing devices, which guarantee the introduction of the components in the % quantities envisaged by the formula. It is possible to supply the various dosing devices for an undetermined amount of time without the need to create mixes that require the intermediate weighing and homogenizing step. The material introduced into the extruder is homogenized inside it and follows the process as described for the discontinuous process.

### Mixed process

It is possible to provide one or more mixes that contain part of the formulation (e.g. partial mix = X + Y). It is necessary to prepare the "partial" mix as indicated in the description of the discontinuous process by the weighing and mixing of the components. The mix thus created is considered, in the continuous process, to be a single component and will be dosed by supplying the extruder as for the remaining components of the formula, without any variations to the actual extrusion process already described for the discontinuous process.

The result of all three processes envisaged is the production of granules that are packaged in appropriate packaging and are ready for subsequent processing.

At the end of the process described above, the composition of the present invention of polymers and/or copolymers is obtained with which it is possible, after appropriate dilution with polymer granules of the same or a different kind, to obtain films or plates in which the essential oil is present nominally (or based on the quantity of diluent) in the amount 1 - 40%, preferably 5 - 30%, more preferably 6 - 25%.

The current (effective) concentration of oil in the film is determined through FT IR spectroscopy on the basis of the intensity of specific bands for each oil.

With the plastic material of the present invention, it is possible to prepare various products in which the presence of an antibacterial and/or antimicrobial component is essential.

In daily use, it is possible to produce products for common use obtained from the different types of polymer materials available;

### THERMOPLASTIC POLYMERS

PS - examples: toys;
PET - examples: food containers;
PVC - examples: toys, bottles, containers;
PP - examples: household items, packaging;
PA - examples: clothing;
ABS - example: toys, 3D printing;
PLA - example: compostable containers, 3D printing;

In a preferred embodiment of the present invention, nylon is used especially as "textile fibre" for preparing items in which the presence of the antibacterial and/or antimicrobial component is important.

If the fibre is used in a continuous thread, the main field of use is that of women's socks; other possible areas:
- sanitary pharmaceutical clothing: doctors' and nurses' coats and tunics; trousers for medical and sanitary personnel; coats for pharmacists; tunics for beauticians; leggings for wellness centre personnel; coats for hairdressers;
- material for healthcare personnel: masks, gauze, plasters, bandages, elastic socks; tape for bandages;
- sports clothing;
- medical clothing;
- in the lingerie sector.

In particular a preferred use comprises the preparation of food packaging material and can comprise single or multiple layers of polymers.

The food packaging material may be produced by extrusion.

The food packaging material may be a film, e.g. a transparent film.

The present invention further provides food packaging formed by or comprising the food packaging material described above.

The food packaging may be a sachet, a bag (e.g. a reclosable bag or a freezer bag), a container, a tray, a sheet, a piece of card, a box, a bottle, a bottle top, a lining, a tube, a barrier sheet, a block and combinations thereof.

In one embodiment, the food packaging material is a bag, such as a PE bag for example. The present invention also provides a method, which comprises:
forming the masterbatch of the present invention; and the processing of the mix for forming a food packaging material.

The treatment can comprise extrusion, moulding, vacuum forming, melting or lamination.

### EXPERIMENTAL PART

### Example 1

### Preparation of hemp essential oil

The hemp essential oil is distilled in a still pot with a metal grill that enables the plant material to be suspended about 20 cm from the bottom. A very reduced quantity of water (e.g. 600 ml for a 10 I boiler) is placed below the grill and is heated. Preferably a steam distribution system (perforated pipes or concentric circles of perforated tubes) connected to an external steam generator is placed below the grating. In this way (known as dry vapour distillation) it is possible to distil only the terpene fraction mainly composed of α-pinene and caryophyllene.

### Example 2

### Example of preparation of a masterbatch for an antibacterial polymer composition

50 g of hemp essential oil, obtained as described in Example 1, are roughly mixed with 450 g of powdered LDPE (LDPE DOW 780E) at room temperature. The mixture is conveyed to the main supply zone of a 21 mm co-rotating twin-screw extruder heated to 180°C. This is followed by the extrusion and cutting process for the production of masterbatches in granule form.

### EXAMPLE 3

### EXAMPLE OF PROCESSING THE MASTERBATCH

A dilution of the masterbatch is prepared as obtained in Example 2 in the main polymer, constituting the finished product (LUPOLEN 2426H LYONDELLBASELL), until the desired concentration of essential oil is obtained and, through the final extrusion or injection moulding process, the product (e.g. film, slab, object) which can in turn undergo further finishing processes.

### Example 4

5 g of essential oil of clove leaves (commercially available) are mixed with 50 g of medium density polyethylene PLASTENE R 210 (commercially available) in a twin-screw mini-extruder Xplore MC 5 with a 5 ml mixing chamber. The chamber is heated to 180°C (screw speed 50 rpm, 5 minutes), the mixture is extruded through a nozzle of diameter d = 2.5 mm, cooled and cut. The pellets obtained are transformed into a film by compression moulding through the use of a hydraulic press with water cooling (temperature used in the previous stage, 50 bar).

### Example 5

The process is the same as for example 4 but using 5 g of cananga odorate oil (commercially available).

### Example 6

5 g of essential oil of clove leaves are mixed with 50 g of polypropylene copolymer PLASTILENE RCM 1042 in powder supplied by Poliplast in a twin-screw mini-extruder Xplore MC 5 with a 5 ml mixing chamber. The chamber is heated to 200°C (50 rpm for 5 minutes). A nozzle (of diameter < 1 mm) is mounted at the outlet, which enables a fibre to be obtained which is collected by a system constituted by a roller that rotates at a controlled speed up to 40 rpm.

### Example 7

The process is the same as for example 6 using 5 g of cananga odorate oil.

### Example 8

The process is the same as for example 6 using 50 g of semi opaque polyamide 66 supplied by Solvay in mechanically pulverised pellets and heating the mixing chamber to 290°C.

### Example 9

The process is the same as for example 6 using 5 g of cananga odorate oil.

### Example 10

The process is the same as for example 4 using 50 g of polyhydroxybutyrate/2% polyhydroxyvalerate in powder form supplied by Goodfellow and heating the mixing chamber to 190°C.

### Example 11

The process is the same as for example 10 using 5 g of cananga odorate oil.

### Antibacterial activity test

The bacterial suspensions of Escherichia coli ATCC 8739 (Gram-) and Staphylococcus aureus ATCC 6538 (Gram+) are diluted so as to obtain a known bacterial concentration expressed in CFU/cm² (colony forming units/cm²). A known quantity of bacterial suspension (cca 105 CFU/cm²) is placed on the specimen of material to be tested (50 x 50 ml) placed inside a Petri dish. The inoculum is then covered with inert material and the plate is incubated at 35°C for 24 h in 90% relative humidity conditions. After the incubation period, the inoculum is recovered by adding 10 ml of neutralising solution to the plate and then proceeding to count the CFU.

The antibacterial activity is determined according to standard ISO 22196:2011. The material is considered to be bactericidal for R > 2. The results are shown in Table 1.

**Table 1**

| | *Escherichia coli ATCC8739* | | |
|---|---|---|---|
| | Cells/cm² To | Cells/cm² 24 h | **R** |
| Example 2 | 1.81 x 10⁴ | 1.27 x 10³ | **2.31** |
| Example 4 | 1.67 x 10⁴ | 0.2 | **5.15** |
| Example 5 | 1.67 x 10⁴ | 0.2 | **5.15** |
| Example 6 | 1.7 x 10⁴ | < 10 | **6.04** |
| Example 8 | 1.2 x 10⁴ | 2.65 x 10² | **3.18** |
| Example 10 | 6.77 x 10³ | <10 | **6.07** |
| Example 11 | 6.77 x 10³ | <10 | **6.07** |

| | *Staphilococcus aureus ATCC 6538* | | |
|---|---|---|---|
| Example 4 | 1.31 x 10⁴ | 0.2 | **4.90** |
| Example 5 | 1.31 x 10⁴ | 0.2 | **4.90** |
| Example 6 | 1.7 x 10⁴ | 5.25 x 10¹ | **2.59** |
| Example 8 | 6.94 x 10³ | 1.31 x 10¹ | **2.82** |

## Claims

1. A plastic material comprising an essential oil with a high terpene content.

2. A concentrated polymer composition comprising:
a) polymer material in variable quantities from 70 to 90% by weight, with respect to the total composition;
b) at least one essential oil with a high terpene content in variable quantities from 1 to 40% by weight, with respect to the total composition;

3. The concentrated composition according to Claim 1, wherein the polymer material is selected from: polycarbonate (PC), polyethylene (PE), polyethylene terephthalate (PET), polymethylmethacrylate (PMMA), polypropylene (PP), polystyrene or polystyrol (PS), polyvinyl chloride (PVC), ethyl vinyl acetate (EVA), nylon or polyamide (PA), acrylonitrile butadiene styrene (ABS), polylactate (PLA), polybutyrate-adipate-terephthalate (PBAT), low density polyethylene (LDPE), medium density polyethylene (MDPE), or mixtures thereof.

4. The concentrated composition of Claim 2, wherein the essential oil is selected from: hemp essential oil (from steam distillation of dry *Cannabis sativa* flowers, free from THC or CBD, mixture of non-oxygenated terpenes), mint essential oil, eucalyptus essential oil, lavender essential oil, geranium essential oil, citronella essential oil, orange essential oil, grapefruit essential oil, kaffir lime essential oil, lime essential oil, lemon essential oil, bergamot essential oil, mandarin essential oil, tea tree essential oil, palmarosa essential oil, lemongrass essential oil, clove essential oil, cinnamon essential oil, cajeput essential oil, basil essential oil, black pepper essential oil, green pepper essential oil, chilli essential oil, ginger essential oil, nutmeg essential oil, patchouli essential oil, lemon balm essential oil, mugwort essential oil, yarrow essential oil, coriander essential oil, myrtle essential oil, cananga essential oil, ylang ylang essential oil, chamomile essential oil or mixtures thereof.

5. The concentrated composition of each of Claims 2 to 3, wherein the essential oil is selected from hemp, cananga and clove essential oil; and the plastic material is selected from: low density polyethylene (LDPE); ethyl vinyl acetate (EVA); polyethylene (PE); medium density polyethylene (MDPE); polypropylene (PP); polyamide (PA), polyhydroxybutyrate/polyhydroxyvalerate (PHB/PHV).

6. The concentrated composition of Claim 4, wherein the essential oil is hemp essential oil.

7. The concentrated composition of Claim 4, wherein the essential oil is cananga essential oil.

8. The concentrated composition of Claim 4, wherein the essential oil is clove essential oil.

9. The concentrated composition according to each of Claims 2 to 8, wherein the quantity of essential oil varies from 5 to 30%.

10. Granules obtainable from the concentrated composition according to each of Claims 2 to 9.

11. An item obtained from granules according to Claim 10.
